Europäisches Patentamt

European Patent Office

Office européen des brevets

(11) Veröffentlichungsnummer: **0 247 491**
**B1**

(12) # EUROPÄISCHE PATENTSCHRIFT

(45) Veröffentlichungstag der Patentschrift:
16.08.90

(51) Int. Cl.⁵: **G01N 23/04**, G01V 5/00

(21) Anmeldenummer: 87107206.2

(22) Anmeldetag: 18.05.87

(54) **Röntgenscanner.**

(30) Priorität: 28.05.86  DE 3617893

(43) Veröffentlichungstag der Anmeldung:
02.12.87 Patentblatt 87/49

(45) Bekanntmachung des Hinweises auf die Patenterteilung:
16.08.90 Patentblatt 90/33

(84) Benannte Vertragsstaaten:
DE FR GB NL

(56) Entgegenhaltungen:
DE-A- 2 831 311
US-A- 3 808 444
US-A- 4 366 382

ELECTRO CONFERENCE RECORD, Band 4, 24.-26.
April 1979, Seiten 18/3:1-13, New York, US; W.T.
BISIGNANI et al.: "Automated X-ray bomb detection
techniques"
JOURNAL OF TESTING AND EVALUATION, Band 13,
Nr. 3, Mai 1985, Seiten 211-216, Philadelphia, US; F.L.
RODER: "Principles, history and status of dual-energy
computerized tomographic explosives detection"

(73) Patentinhaber: Heimann GmbH, Weher
Köppel 6 Postfach 30 07, D-6200 Wiesbaden 1(DE)

(72) Erfinder: Glockmann, Walter, Vordelbacher Strasse 5,
D-6229 Schlangenbad 2(DE)
Erfinder: Herwig, Thomas Dipl.-Phys., Wiesenstrasse 8,
D-6228 Eltville 4(DE)

(74) Vertreter: Fuchs, Franz-Josef, Dr.-Ing. et al,
Postfach 22 13 17, D-8000 München 22(DE)

## Beschreibung

Die Erfindung betrifft einen Röntgenscanner mit einem Röntgenstrahler mit Blende für ein fächerförmiges Röntgenstrahlenbündel auf einer Seite und einer Zeile von einzelnen Detektoren auf der anderen Seite einer Transportvorrichtung für zu untersuchendes Gut, bei der die beiden Randdetektoren von den beiden Randstrahlen des den Prüfraum im wesentlichen vollständig durchsetzenden Röntgenstrahlenbündels getroffen werden, sowie mit einer Elektronik zur Erfassung und Verarbeitung der Detektorsignale und einem nachgeschalteten Sichtgerät.

Röntgenscanner dieser Art werden zum Auffinden von Waffen insbesondere auf Flughäfen benutzt. Die mit solchen Geräten erzeugten Bilder zeigen aufgrund der zur Metalldurchdringung erforderlichen Hochspannung von z.B. etwa 140 kV wenig absorbierende Teile nur schwach. Deshalb können solche Teile, insbesondere Plastiksprengstoff, bei gemischt bestückten Gepäckstücken übersehen werden.

Der Erfindung liegt die Aufgabe zugrunde, einen Röntgenscanner der eingangs genannten Art so auszubilden, daß die Menge und die Verteilung von Kunststoffen im Gepäck detektiert werden kann, so daß die Erfassung von Plastiksprengstoff mit hoher Sicherheit möglich ist.

Diese Aufgabe ist erfindungsgemäß dadurch gelöst, daß um den Prüfraum im Abstand von der Zeile zusätzliche Detektoren für die vom Röntgenstrahlenbündel erzeugte Streustrahlung angeordnet sind. Bei dem erfindungsgemäßen Röntgenscanner wird das Vorhandensein und die grobe räumliche Verteilung größerer Kunststoffteile als Verdachtsmoment genutzt. Es wird außer dem Primärstrahlenbündel auch der gestreute Anteil der Röntgenstrahlung ausgewertet, der aufgrund der geringen Absorption bei Kohlenwasserstoffen verglichen mit anderen Materialien relativ hoch ist. Dabei ist eine grobe Angabe von Menge und Verteilung von Kunststoffen ausreichend. Andererseits ist jedoch wegen der fortschreitenden Miniaturisierung von Zündern und Zünddrähten ein gut auflösendes Röntgen-Transmissionsbild mit hoher Grauwert-Dynamik und geringer Dosisbelastung des zu durchleuchtenden Gutes sichergestellt, das mit dem als Zeilenscanner ausgebildeten Röntgenscanner mit einem durch einen feststehenden Schlitzkollimator erzeugten fächerförmigen Röntgenstrahlenbündel und direkt im Röntgenstrahlenbündel befindlichen Szintillator-Fotodioden-Array erzeugt wird. Das fächerförmige Röntgenstrahlenbündel wird demgemäß außer zur Transmission-Bilderzeugung auch als Primärstrahl für die nachzuweisende Streustrahlung genutzt. Die Streustrahlung wird durch mehrere um den Prüfraum herum angeordnete großflächige Detektoren aufgenommen. Die Detektorsignale können aufintegriert werden, um eine Aussage über die gesamte im Prüfobjekt vorhandene Kunststoffmenge zu erhalten. Zusätzlich können aus der Zeit die x-Koordinate (Bewegungsrichtung des Prüfgutes) und aus einer Korrelation der einzelnen Detektorsignale die ungefähren y- und z-Koordinaten ermittelt werden.

Der Detektor für die Streustrahlung kann aus einem flächigen Szintillator bestehen, dessen Licht mittels einer bekannten optischen Vorrichtung (Fresnel-Linse, Lichtleitbündel, verspiegelte Kammer) auf einen hochempfindlichen Lichtdetektor, z.B. einen Fotovervielfacher, übertragen wird. Besonders zweckmäßig ist es jedoch, wenn als Lichtdetektor ein lichtempfindlicher Halbleiter, z.B. eine Fotodiode, benutzt wird, der durch einen kleinen mechanischen Modulator mit einer festen Modulationsfrequenz belegt wird. Zur Unterdrückung des bei solchen Halbleitern störenden Ruhe-Gleichstromes (Dunkelstrom) wird das Detektorsignal nur selektiv bei der Modulationsfrequenz verstärkt. Der so gebildete, hochempfindliche Detektor ist wesentlich kleiner und preisgünstiger als ein Fotovervielfacher.

Die Erfindung ist nachfolgend anhand eines in der Zeichnung dargestellten Ausführungsbeispieles näher erläutert. Es zeigen:

Fig. 1 einen Schnitt durch einen Röntgenscanner nach der Erfindung, und

Fig. 2 eine Seitenansicht des Röntgenscanners gemäß Figur 1.

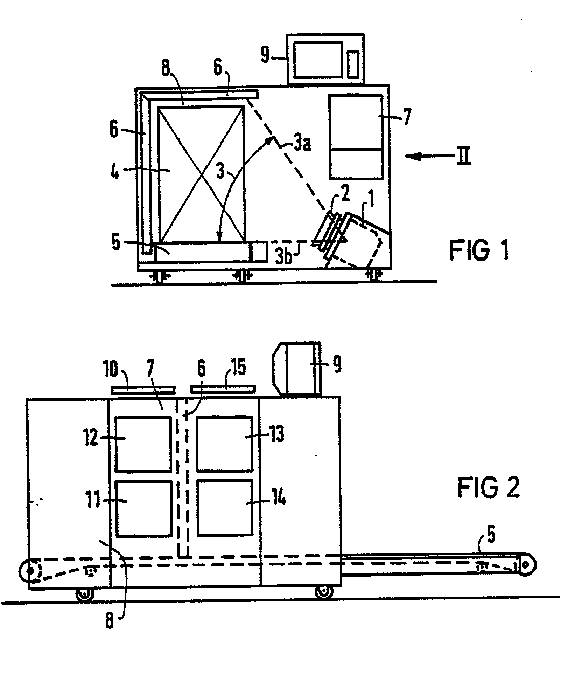

In der Figur 1 ist ein Röntgenstrahler 1 dargestellt, der ein mit Hilfe einer Blende 2 eingeblendetes fächerförmiges Röntgenstrahlenbündel 3 aussendet, das Prüfgut 4 auf einer Transportvorrichtung 5 vollständig durchsetzt. Die Transportvorrichtung 5 ist dabei von einem Förderband gebildet, dessen Transportrichtung senkrecht zur Zeichenebene verläuft. In der Figur 2 ist das Förderband dargestellt. Die beiden Randstrahlen 3a und 3b des Röntgenstrahlenbündels 3 treffen auf den Randdetektoren einer rechtwinklig geknickten Zeile 6 von einzelnen Detektoren auf. Die Ausgangssignale dieser Detektoren werden von einer Elektronik 7 verarbeitet, die einen Bildspeicher aufweist, der für jeden Einzeldetektor je eine Speicherzeile besitzt. Dadurch ist es möglich, beim Transport des Prüfgutes 4 relativ zum Röntgenstrahlenbündel 3 ein Röntgenschattenbild zeilenweise aufzubauen und auf einem Monitor 9 wiederzugeben. Die beiden Randstrahlen 3a, 3b durchsetzen den Prüfraum 8 dabei im wesentlichen vollständig, so daß Prüfgut 4 jeder Größe vollständig durchstrahlt wird.

Die Figur 2 zeigt, daß neben der Zeile 6 um den Prüfraum 8 im Abstand von dieser Detektoren 10, 11, 12, 13, 14, 15 für die vom Röntgenstrahlenbündel 3 erzeugte Streustrahlung angeordnet sind. Über die Streustrahlung kann dabei in der geschilderten Weise das Vorhandensein von Plastiksprengstoff über die Streuung der Primärstrahlung in Kunststoffteilen erfaßt werden.

## Patentansprüche

Röntgenscanner mit einem Röntgenstrahler (1) mit Blende (2) für ein fächerförmiges Röntgenstrahlenbündel (3) auf einer Seite und einer Zeile (6) von einzelnen Detektoren auf der anderen Seite einer Transportvorrichtung (5) für zu untersuchendes Gut, bei der die beiden Randdetektoren von den beiden Randstrahlen (3a, 3b) des den Prüfraum (8) im wesentlichen vollständig durchsetzenden Röntgenstrahlenbündels getroffen werden, sowie mit einer Elektronik (7) zur Erfassung und Verarbeitung der Detektorsignale und einem nachgeschalteten Sichtgerät (9), **dadurch gekennzeichnet,** daß um den Prüfraum (8) im Abstand von der Zeile (6) zusätzliche Detektoren (10 bis 15) für die vom Röntgenstrahlenbündel (3) erzeugte Streustrahlung angeordnet sind.

## Claims

An X-ray scanner comprising an X-ray source (1) having a diaphragm (2) for a fan-shaped X-ray beam (3) on one side and a line (6) of individual detectors on the other side of a transporting device (5) for the articles to be examined, wherein the two marginal detectors are struck by the two marginal rays (3a, 3b) of the X-ray beam which substantially completely permeates the examination chamber (8), and having electronic means (7) for receiving and processing the detector signals and a visual display (9) arranged thereafter, characterised in that arranged around the examination chamber (8) spaced from the line (6) are additional detectors (10 to 15) for the scatter radiation generated by the X-ray beam (3).

## Revendications

Scanner X comportant un émetteur radiologique (1) comprenant un diaphragme (2) pour un faisceau de rayons X en forme d'éventail (3), placé d'un côté, et une rangée (6) de détecteurs individuels, placée de l'autre côté d'un dispositif (5) de transport de l'objet à examiner, et dans lequel les deux détecteurs marginaux sont atteints par les deux rayons marginaux (3a, 3b) du faisceau de rayons X traversant sensiblement complètement l'espace de contrôle (8), ainsi qu'un dispositif électronique (7) servant à détecter et traiter les signaux des détecteurs et un appareil de visualisation (9) branché en aval, caractérisé par le fait que des détecteurs supplémentaires (10 à 15) servant à détecter le rayonnement diffus produit par le faisceau de rayons X (3) sont disposés, à distance de la rangée (6), autour de l'espace de contrôle (8).

FIG 1

FIG 2